# EUROPEAN PATENT SPECIFICATION

(11) **EP 3 671 615 B1**
(45) Date of publication and mention of the grant of the patent: **06.08.2025**
(21) Application number: 19217985.1
(22) Date of filing: 19.12.2019
(51) Int. Cl.: H04L 9/00, G06Q 40/04, G06Q 50/18

(54) **MULTIPLE CHAIN MESSAGE DATA RECORDATION WITH ADJUSTABLE VISIBILITY PERMISSIONING**
MEHRKETTENNACHRICHTENDATENAUFZEICHNUNG MIT EINSTELLBARER SICHTBARKEITSBERECHTIGUNG
ENREGISTREMENT DE DONNÉES DE MESSAGES À CHAÎNES MULTIPLES À AUTORISATION DE VISIBILITÉ RÉGLABLE

(30) Priority: 21.12.2018 US 201816230112
(43) Date of publication of application: 24.06.2020
(73) Proprietor: Chicago Mercantile Exchange Inc., Chicago IL Illinois 60606 (US)
(72) Inventor: PIERCE, Ryan David, Chicago, IL Illinois 60606 (US); BILLINGS QUINN, Makenzie June, Chicago, IL Illinois 60606 (US); MORLEY, Jonathan Burrows, Chicago, IL Illinois 60606 (US); TIMBERLAKE, Robert Jason, Chicago, IL Illinois 60606 (US); LIBERMAN, Stanislav, Chicago, IL Illinois 60606 (US); MCDANNEL, Graham Robert, Chicago, IL Illinois 60606 (US); VU, Anna-Lisa Suarez, Chicago, IL Illinois 60606 (US)
(74) Representative: Boult Wade Tennant LLP

(56) References cited:
- WO-A1-2017/007806
- CN-A- 107 886 388
- US-A1- 2018 001 184
- PETER ROBINSON: "Requirements for Ethereum Private Sidechains", ARXIV.ORG, CORNELL UNIVERSITY LIBRARY, 201 OLIN LIBRARY CORNELL UNIVERSITY ITHACA, NY 14853, 26 June 2018 (2018-06-26), XP081242449
- ANONYMOUS: "Distributed Ledger Technology & Cybersecurity - Improving information security in the financial sector", 25 January 2017 (2017-01-25), XP055356094, ISBN: 978-92-9-204200-4, Retrieved from the Internet <URL:https://www.enisa.europa.eu/publications/blockchain-security/at_download/fullReport> [retrieved on 20170317]
- SWANSON ET AL: "Consensus-as-a-service: a brief report on the emergence of Permissioned, distributed ledger systems", GREAT WALL OF NUMBERS, 6 April 2015 (2015-04-06), pages 1 - 66, XP055457866, Retrieved from the Internet <URL:http://www.ofnumbers.com/wp-content/uploads/2015/04/Permissioned-distributed-ledgers.pdf> [retrieved on 20180308]
- XIWEI XU ET AL: "A Pattern Collection for Blockchain-based Applications", PATTERN LANGUAGES OF PROGRAMS, ACM, 2 PENN PLAZA, SUITE 701NEW YORKNY10121-0701USA, 4 July 2018 (2018-07-04), pages 1 - 20, XP058426313, ISBN: 978-1-4503-6387-7, DOI: 10.1145/3282308.3282312

## Description

### BACKGROUND

Bilateral trade negotiation and matching is often a manual process involving a hodgepodge-like mixture of tools and practices. For instance, brokers may use a combination of spreadsheets, instant messaging, chat platforms, phone calls and handwritten notes to negotiate a transaction. These characteristics of the negotiations result in substantial throwaway work performed by the brokers and other participants in the negotiations.

Bilateral trade negotiations also typically involve one-to-one communications and fragmented individual networks. Markets involving such negotiations can suffer from limited liquidity and lack of competitive pricing.

For the foregoing reasons, bilateral trade negotiations often exhibit fractured communication sequences. Audit requirements are thus a challenge. Making matters worse, a central authority for trade clearing (e.g., a clearing house) is not privy to the negotiation and trade matching processes occurring between these parties. As a result, brokers are forced to self-report the results of the negotiations to satisfy regulatory obligations. Unfortunately, reporting is also a fractured, manual process, with potential for gaps and non-compliance.

The self-reporting notwithstanding, the negotiations remain opaque to the clearing house and regulator. While some information and other data is captured in, for instance, chat logs, much of the negotiation data is not readily or at all available for an audit trail or other investigation (e.g., to scrutinize trade irregularities).

Background art document ROBINSON Peter, "Requirements for Ethereum Private Sidechains", ARXIV.ORG, CORNELL UNIVERSITY LIBRARY, 26 June 2018. <DOI:10.48550/ arXiv.1806.09834>: discloses a system and method for performing transactions stored in a sidechain that is pinned to the main chain.

### BRIEF DESCRIPTION OF THE DRAWINGS

Figure 1 depicts a schematic representation of a sequence of communication events for a bilateral transaction involving aspects of messaging techniques in accordance with one example of the disclosed systems and methods.
Figure 2 depicts a flow chart showing a message data recordation method in accordance with one example.
Figure 3 depicts a flow diagram showing a communication event sequence processed by the message data recordation method of Figure 2 in accordance with one example.
Figure 4 depicts a block diagram of a message data recordation system configured in accordance with one example.
Figure 5 depicts a block diagram showing a message data recordation system configured in accordance with another example.
Figure 6 shows an illustrative embodiment of a general computer system for implementing one or more of the methods disclosed herein, and/or for use with one or more of the systems disclosed herein.
Figure 7 depicts a block diagram of an exemplary exchange system and framework for implementing one or more of the disclosed methods and/or for use with one or more of the disclosed systems.

### DETAILED DESCRIPTION

Methods and systems for message data recordation and other processing of a sequence of communication events are described. The disclosed methods and systems may implement an iterative process for recordation and other processing of the sequence of communication events. The nature of the communication events may vary. In some cases, the communication events may be directed to, or otherwise involve, bilateral trade negotiations, matching, or other transactional procedures related to trading. In this context, the disclosed methods and systems are capable of expanding a participant's (e.g., a broker's) reach to further (e.g., all) liquidity providers. The disclosed methods and systems also remove the labor-intensive steps of tracking multiple negotiations manually, and eliminate, reduce, or minimize delays in reporting and compliance issues implicated by the negotiation process.

The message data recordation and processing of the sequence of communication events is configured to adjust visibility permissions for participants in their respective communication events. The permissions may thus address the visibility of the message data for each communication event. The visibility of the message data accordingly varies across the sequence of communication events.

The disclosed methods and systems employs blockchain data structures to provide for the recordation and reporting of the information or other data representative of the sequence of communication events in immutable fashion. Multiple chains are created to allow the visibility of message data to be adjusted. For instance, a subsidiary chain data structure may be created to support part of the sequence of communication events. The disclosed methods and systems are thus capable of providing privacy for those involved in an individual negotiation, while still binding the participants who ultimately finalize or complete the trade as part of an agreed upon transaction. As described below, the visibility permissioning provided by the disclosed methods and systems also supports informing the original group of participants (e.g., the rest of the market) that the transaction is completed while maintaining the privacy of the transaction details. Thus, any participant initially or otherwise solicited for a transaction has its market interest protected and receives a notification in the event that someone else completes (e.g., wins) the bidding process. With completed deals reported to the broader network immediately, regulatory and/or other reporting requirements are satisfied and market participants not party to the deal receive notice of the completed transactions more quickly, without being able to see any sensitive negotiation information.

Although described below in connection with bilateral transactions, the nature of the message data processed by the disclosed methods and systems need not involve negotiations, transactions or trading. A variety of different message types and contexts may be addressed by the disclosed methods and systems. Examples of other types of messaging include data indicative of allocations and claims of already-matched trades, transfers of open trading positions, average pricing of batched transactions, and other post-trade processes.

Although described below in connection with examples involving blockchain-based messaging, the disclosed methods and systems are well suited for use with a variety of communication platforms and media. In some cases, different platforms and media may be used by different participants in the same sequence of communication events. The disclosed methods and systems may use keywords to capture message data for each message or communication event. The keywords may be preceded or otherwise denoted with hashtags or other standardized or predetermined symbols or characters.

Although described herein in connection with bilateral trade negotiations, the disclosed embodiments are well suited for use with other types of negotiations, transactions and financial instruments. For example, transactions such as block trades, exchange for related positions (EFRPs), and other privately negotiated transactions (PNTs) may benefit from the message data recordation and visibility permissioning provided by the disclosed methods and systems.

The blockchains, replicated ledgers and other data structures created, managed, and used by the disclosed methods and systems may be configured, created, managed, and used as described in U.S. Patent Publication No. 2017/0295023 ("Bilateral Assertion Model and Ledger Implementation Thereof") and U.S. Patent Application Serial No. 16/196,257 ("Selectively Replicated Trustless Persistent Store"), The blockchains and other data structures may use consensus rules, and the rules may be changed in accordance with the synchronization techniques described in U.S. Patent Publication No. 2018/0039667 ("Systems and Methods for Blockchain Rule Synchronization"), The messages and communication events may be configured as, or otherwise incorporate hashtag and other features of the communication protocol, described in U.S. Patent Application Serial No. 15/854,365 ("Integration Application Utilizing a Communications Protocol").

In some cases, the disclosed methods and systems are implemented by a clearing house or exchange. For instance, a computer system of the clearing house or the exchange (i.e., an exchange computer system) may include one or more aspects of, or be configured as, the disclosed systems and/or be configured to implement one or more aspects of the disclosed methods. The clearing house may be an adjunct to an exchange responsible for settling trading accounts, clearing trades, collecting and maintaining performance bond funds, regulating delivery, and reporting trading data. Clearing is the procedure through which the clearing house becomes buyer to each seller of an instrument, and seller to each buyer, and assumes responsibility for protecting buyers and sellers from financial loss by assuring performance on each contract. This is effected through the clearing process.

The disclosed methods and systems may provide an exchange computer system or other trading-related computer system a new technique for recording the details of each negotiation and each transaction. The replication of the data structure establishes the irrefutable and immutable nature of the recorded details for enforcement by the exchange or clearing house.

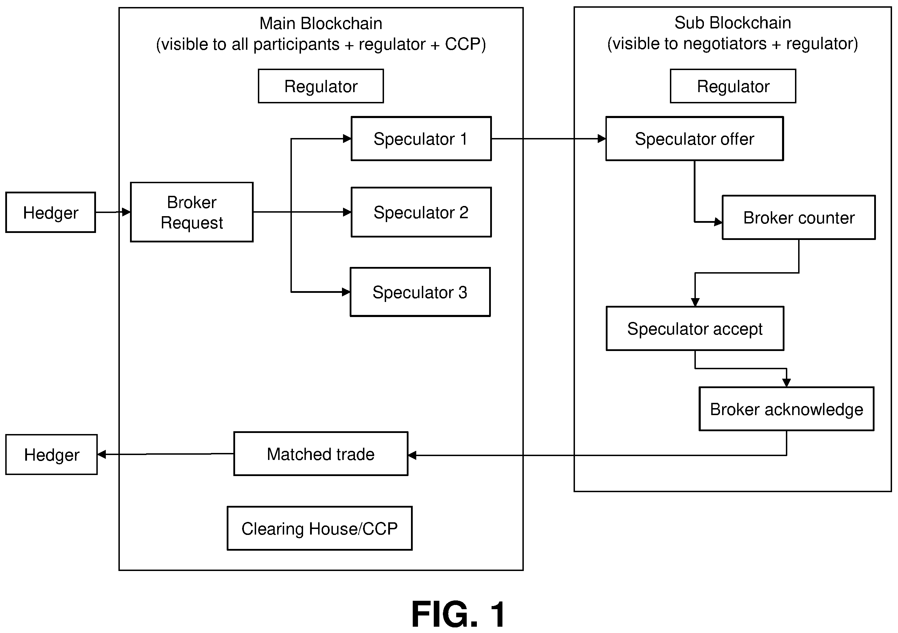

Figure 1 depicts an example of bilateral trade negotiation having a sequence of communication events for which message data is recorded in accordance with the disclosed methods and systems. In this example, a hedger directs a broker to issue a request for quote (RFQ). The RFQ is the originating message for an initial communication event of the sequence. The originating message includes message data that specifies an initial group of participants to which the originating message is to be visible. In this case, the originating message is sent to three speculators in a one-to-many fashion. A regulator and a clearing house may also be privy to the originating message in some cases. As described below, the message data for the originating message is stored in a main or primary data structure. In this example, the data structure is or includes a blockchain. The blockchain is replicated in a respective memory (e.g., storage) at each participant, with each participant having visibility permission for the originating message (i.e., the broker, the three speculators, the clearing house, and the regulator).

A subsidiary data structure is created in connection with a response to the originating message. In the example of Figure 1, Speculator 1 generates a responsive message (e.g., an offer). The responsive message includes the details of the offer as well as recipient data that establishes visibility permissions for the responsive message. In this example, the recipient data specifies that only the broker, Speculator 1, and the regulator have visibility. To implement the visibility permission, a subsidiary data structure - in this case, a subsidiary blockchain of the main blockchain - is created. The message data for the responsive message, and any subsequent messages during the negotiations between the broker and Speculator 1, are stored in the subsidiary blockchain. In the example of Figure 1, three additional messages are generated in sequence. In a first one of the additional messages, a counter offer from the broker is presented. The speculator accepts in a second one of the additional messages. In the third additional message, the broker acknowledges the acceptance. Each additional message has recipient data that maintains the visibility permission level or state such that no additional blockchains are created.

In the example of Figure 1, the communication sequence ends when the broker sends a message acknowledging an acceptance by Speculator 1. As shown in Figure 1, further message or communication event data is stored in the main blockchain to indicate the completion of the sequence (e.g., trade or transaction). The further message or communication event data may merely indicate the fact of completion, rather than the details of the transaction (e.g., price, quantity, etc.). As described below, such anchoring of the subsidiary blockchain to the main blockchain maintains privacy of the private portions of the communication sequence, while making the broader group of participants aware of the completion. For instance, in some cases, a hash or Merkle root of the subsidiary blockchain may be used, e.g., incorporated into the blockchain for the completed (e.g., matched) trade.

The message data for each of the messages or communication events may be captured by parsing the messages to capture keywords or other predefined text strings. As described below, the keywords may be used to indicate bids and offers, solicit and respond to bids and offers, and identify the recipient data. Automating the message data capture using the keywords is capable of reducing or eliminating ambiguity, manual work, and opportunity for error. For these and other reasons, implementation of the disclosed methods and systems may automate the bidding, negotiation, and matching steps of bilateral trades and transactions, while scaling to any size network, and preserving the negotiation and execution steps for regulatory reporting in an immutable fashion.

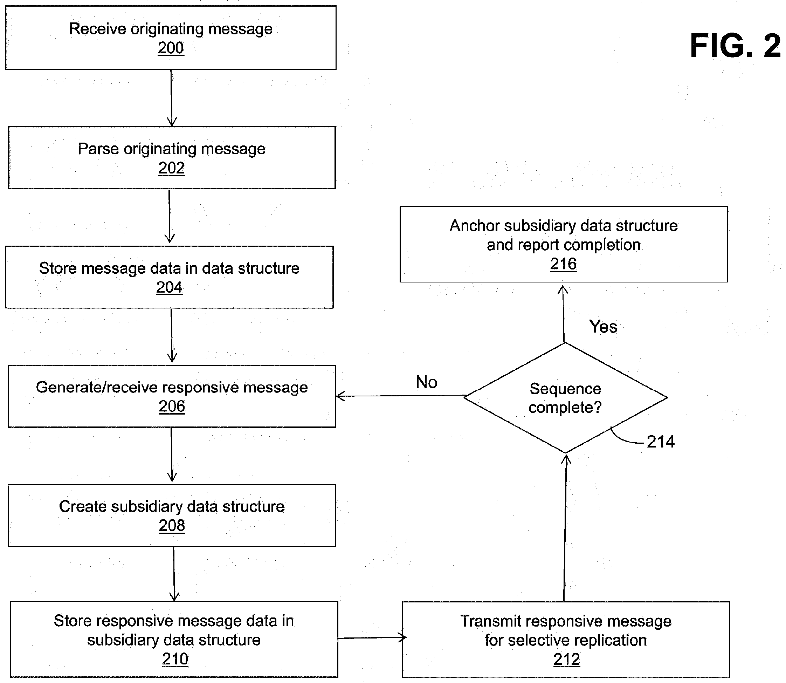

Figure 2 depicts a computer implemented method for message data recordation for a sequence of communication events, such as the communication sequence occurring in a bilateral trade negotiation. The acts of the method may be implemented by a communication processor at each participant, including a clearinghouse or other central party. The method may begin with receipt, via a network interface, of an originating message for an initial communication event of the sequence of communication events (block 200). The originating message for the initial communication event is then parsed to extract message data for the initial communication event (block 202). The extracted message data specifies a first group of participants to which the originating message for the initial commmunication event is visible. The extracted message data is stored in a data structure for the sequence of communication events (block 204). The data structure may be a blockchain or other replicated or distributed ledger. The data structure is replicated by a respective communication processor of each participant of the first group of participants.

A responsive message to the originating message is generated or received (block 206). In either case, the responsive message includes responsive message data that, in turn, includes recipient data that permissions a second group of participants to which the responsive message is visible. The second group differs from the first group. For instance, the second group may be a subset of the first group. Alternatively or additionally, the second group may include additional participants. In some cases, the responsive message is or includes an acknowledgement. For example, an exchange or other third party may generate an acknowledgement confirming that the third party has received an originating or other message, received a response from the other parties in the negotiation, or a match between two of the parties. An acknowledgement may alternatively be sent from the other parties in the negotiation.

A subsidiary data structure of the data structure is created in connection with the responsive message (block 208). In this case, the subsidiary data structure is created to address and support the adjustment in visibility permissioning. The responsive message data is stored in the subsidiary data structure (block 210). The recipient data for the responsive message data is also stored.

The responsive message is transmitted via the network interface to the second group of participants (block 212). The receipt of the responsive message causes the subsidiary data structure to be replicated by the respective communication processor of each participant in the second group of participants.

A decision block 214 then determines whether the sequence is complete as a result of the responsive message. For example, the sequence may be complete if the responsive message has accepted an offer. The determination may include a detection of a keyword indicative of such acceptance. The determination may be made by a processor at the exchange or another third party and/or by processors at each party involved in the sequence. If the sequence is complete, control passes to a block 216 in which the subsidiary data structure is anchored or otherwise incorporated into the primary data structure for the originating message. For example, a hash or Merkle root of the subsidiary data structure may be incorporated into the primary data structure upon completion of the sequence of communication events. In the example of Figure 2, completion may also be reported via one or more messages. If the sequence is not complete, then control returns to the block 206 for further responsive message generation and reception.

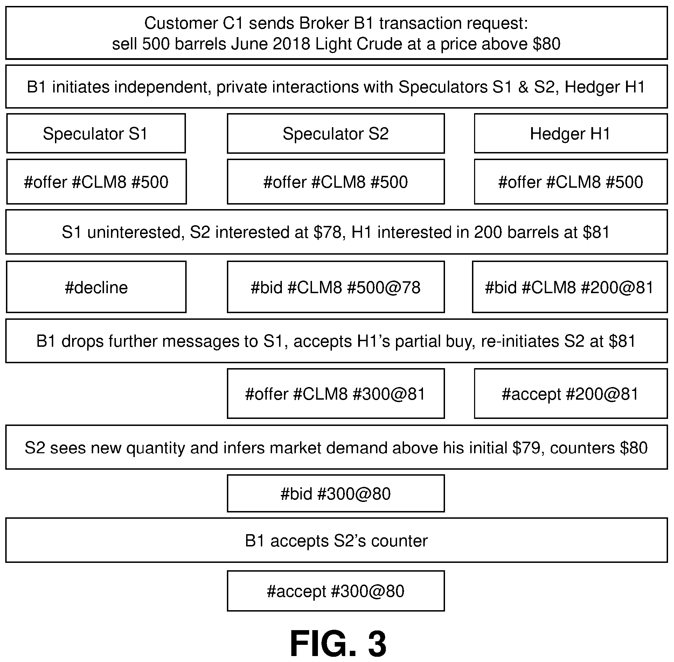

Figure 3 provides an example of the implementation of the method of Figure 2 in connection with a communication sequence in which message data is provided and captured using hashtag based keywords. The example shows how the messaging and message data recordation techniques described herein allow brokers or commercial clients ("hedgers") to propose bilateral transactions in a one-to-many fashion, reaching any eligible participants of a given market. Participants ("speculators") would be enabled and encouraged to respond to the proposals, initiating a negotiation cycle visible to both parties, but kept private from the broader market, with bids/offers preserved for exchange or regulator review to satisfy reporting requirements. Agreement by one party to the other's bid/offer triggers an immutable transaction on the main ledger, visible to all participants and also satisfying existing reporting requirements.

The negotiation cycles in the example of Figure 3 are triggered by hashtags or other unique keywords or identifiers or tags, which trigger their own ad hoc distributed ledger to meet requirements that negotiation details remain private while the completed negotiation is binding and visible on the main ledger.

These hashtags or keywords may be predefined as, for instance, part of a predefined protocol. The hashtags or keywords allow any participant receiving the initial bid invitation to respond in kind and enter an ad hoc, secure negotiation phase whose contents are preserved, but protected from others in the broader network. Because the messaging and data structures are implemented via distributed ledgers, other parties are capable of confirming that negotiations were taking place and untampered, but not see the parties, prices, or quantities involved.

With the hashtags acting as a "call and response", parties may solicit offers, respond with counter-offers, and ultimately accept a broker's terms. This accept message closes the negotiation phase, ending further entries on the sub-chain and returning the final value to the main ledger, where the broader network would be able to see the outcome. Regulators are then able to view both the finished transaction, and audit the intermediate steps leading up to it, without any additional work or trust required from brokers or other participants.

In the example of Figure 3, the originating message is based on a transaction request from Customer C1 to Broker B1. In accordance with that request, the Broker B1 generates the originating message, in which an offer to sell 500 barrels of June 2018 Light Crude at a price above $80 is presented. The offer (and others described herein) may be configured as a limit order, i.e., at a price at or above $80. In this example, the originating message presents that order and constituent message data as follows: #offer #CLM8 #500. Each keyword is denoted by a hashtag. In this case, Broker B1 decides not to specify include a keyword specifying a price, but a price may be specified in other cases. Other keywords, symbols or characters may be used. The originating message also specifies that Speculators S1, S2, and Hedger H1 are included in the group of participants having visibility of the offer. For example, Broker B1 may use specific user tags to direct the originating message to a limited group. Alternatively, the originating message may include a tag specifying a group, which may be limited (e.g., #GroupA) or broadcast market-wide (e.g., #Everyone). Each one of the specified participants receives the originating message, creates a replication of a main or primary data structure for the communication sequence, and stores the message data in the data structure.

In the example of Figure 3, Speculator S1 sends a responsive message, declining the offer as follows - #decline. In some cases, a subsidiary data structure is created for the responsive message.

Subsidiary data structures are created in connection with the responsive messages from Speculator S2 and Hedger H1, each of whom respond with a bid via a #bid keyword and the details as shown. The responsive messages also specify that only Broker B1 is permissioned to view the responsive messages. Respective subsidiary data structures are accordingly created for storing the ensuing message data for each negotiation. In this example, the negotiations end using a keyword #accept.

The example of Figure 3 shows how three initial solicitations spawned two subsidiary blockchain negotiations, each of which concludes with a trade. Upon conclusion, and as described further below, data indicating that a transaction occurred, but without negotiation details, is reported back to the main blockchain (e.g., via anchoring). The data indicating that a transaction occurred is thus visible to all of the initial market participants, including other non-message generating participants, such as a clearing house and a regulator. The regulator may also be permissioned to view the data in each of the subsidiary blockchains.

The example of Figure 3 shows how the disclosed methods and systems automates the bidding, negotiation, and matching steps of a transaction, while being capable of scaling to any size network. The permissioned, private distributed ledger of the disclosed methods and systems preserves the negotiation and execution steps (e.g., information) for regulatory reporting in an immutable fashion by means of a permissioned, private distributed ledger. Both proposed deals and finalized ones are immortalized in the ledger, with details kept private or shared publicly as specified and desired. The example of Figure 3 also shows the manner in which a predefined, simplified vocabulary, participants supports the accurate solicitation and response to bids and offers, while reducing ambiguity and manual work.

With the disclosed methods and systems, deal initiators are capable of proposing bilateral transactions in a targeted broadcast, reaching any or all eligible participants of a given market. Speculators and other participants can respond to the proposals, initiating a negotiation cycle visible to both parties but kept private from the broader market, with bids/offers preserved for exchange or regulator review to satisfy reporting requirements. Agreement by one party to the other's bid/offer will trigger an immutable transaction on the public ledger, where visibility can be permissioned to all or a subset of the market, as well as regulators and the clearing house to satisfy existing reporting requirements.

In addition to the immutable features of a distributed ledger, the distributed ledger of the disclosed methods and systems allows the lineage of each transaction to be preserved, and non-repudiation of agreed upon transactions through the use of digital signatures on the chained transaction hashes. In other words, if a deal is questioned then the specifics of its bid/offer and response can be summoned. Should a regulator suspect irregularities, the entire negotiation sequence can be audited, as well as related interactions with other parties which can be linked by timestamp and tagging.

Permissioned private distributed ledgers allow selective replication (only transmitting data relevant to the parties) of transactions on bilateral or multilateral basis. The disclosed methods and systems alleviate the need for costly encryption solutions while improving security.

Additional transaction integrity guarantees may be achieved by the disclosed methods and systems if external anchors are used for completed transactions. As described herein, evidence of an attested transaction evidence may be written to an external source, which may be public, because the evidence itself does not contain any private data. In other words, the broader market may thus see that a deal has taken place without its details being revealed.

The permissioned distributed ledger of the disclosed methods and systems may be applied in other transaction workflows or communication sequences. For instance, the transaction workflow may be a one-to-one bilateral transaction. The permissioned ledger may be used to carve out a single private negotiation from broader market visibility, while providing the lineage associated with the negotiation to thereby ensure non-repudiation. Various multilateral (e.g., one-to-many) negotiations may be handled in which one party permissions multiple parties to the same request. Multiple private negotiations or a single public group negotiation may thus be recorded. The number of resulting transactions may vary.

The disclosed methods and systems are capable of expanding a participant's reach to more (e.g., all) liquidity providers, removing the labor-intensive steps of tracking multiple negotiations manually, and minimizing delays in reporting. The disclosed methods and systems also minimize compliance issues surrounding the negotiation process, by guaranteeing tamper-resistance and the lineage of each negotiation.

As described above, the ability to provide selective replication improves security and reduces the need for encryption. Additionally, leveraging external anchors provides a declaration of an event/trade without disclosing the details associated therewith. These aspects of the disclosed methods and systems allow any party solicited for a deal to have its market interest protected and receive notification should someone else complete the transaction process. Moreover, with completed deals distributed to the broader network immediately, reporting requirements are satisfied and market participants not party to the deal receive notice of those transactions more quickly, without being able to see any sensitive negotiation information.

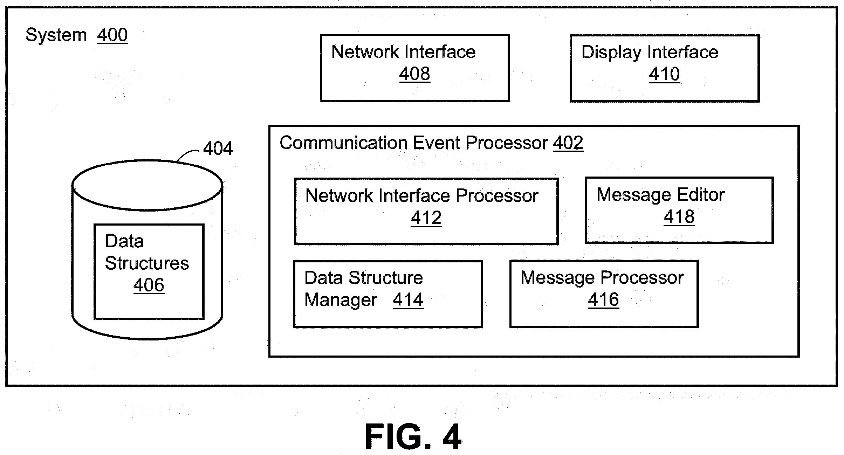

With reference to Figure 4, where elements in common with other figures are indicated via common reference numerals, a system 400 for message data recordation for a sequence of communication events in accordance with one example is depicted. The system 400 may be used to implement any of the methods described herein. The system 400 may be for any one of the participants in the communication sequence, including central or other inactive parties, such as a regulator.

The system 400 includes a communication event processor 402, which may correspond with any one of the processors referenced herein. The communication event processor 402 is configured to record message data for a sequence of communication events on a memory 404. As described herein, the message data is recorded using an arrangement of multiple data structures 406, including a primary or main data structure and a number of subsidiary data structures.

The system 400 includes a network interface 408 to support receipt and transmission of the messages of each communication event. The system 400 further includes a display or other user interface 410 to facilitate entry and viewing of message content.

In the example of Figure 4, the communication event processor 402 includes the following component processors: a network interface processor 412; a data structure manager 414; a message processor 416; and, a message editor 418. The component processors may be integrated with one another, and/or other components of the communication event processor 402, to any desired extent.

The network interface processor 412 is configured to receive, via the network interface 408, an originating message for an initial communication event of the sequence of communication events. The message processor 416 is configured to parse the originating message for the initial communication event to extract message data for the initial communication event, the extracted message data specifying a first group of participants to which the originating message for the initial commmunication event is visible. The data structure manager 414 is a data structure management processor configured to store the extracted message data in the data structure, the data structure being replicated by a respective communication processor of each participant of the first group of participants. The message processor 416 is further configured to generate a responsive message to the originating message, the responsive message including responsive message data, the responsive message data including recipient data, the recipient data permissioning a second group of participants to which the responsive message is visible, the second group differing from the first group. The data structure manager 414 is further configured to create, in the memory 404, a subsidiary data structure of the data structure and store the responsive message data in the subsidiary data structure. The network interface processor 412 is further configured to transmit, via the network interface 408 to the second group of participants, the responsive message such that receipt of the responsive message causes the subsidiary data structure to be replicated by the respective communication processor of each participant in the second group of participants.

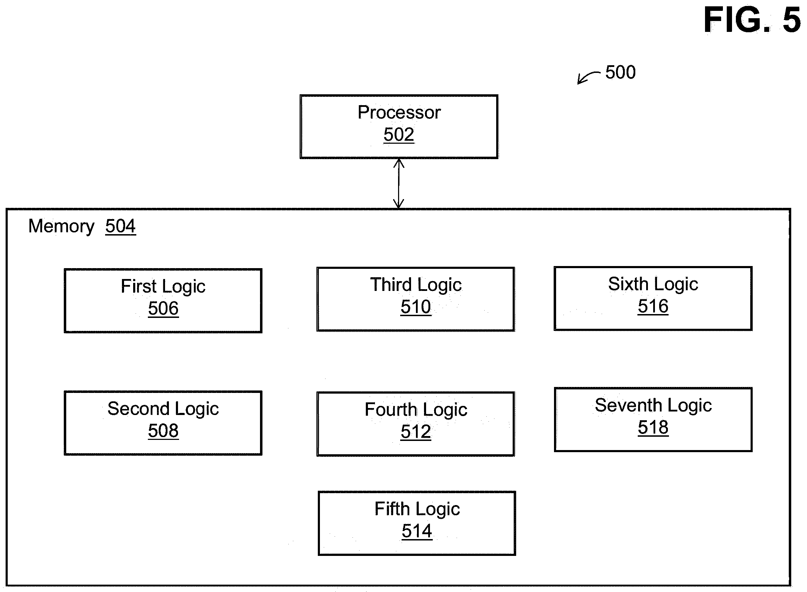

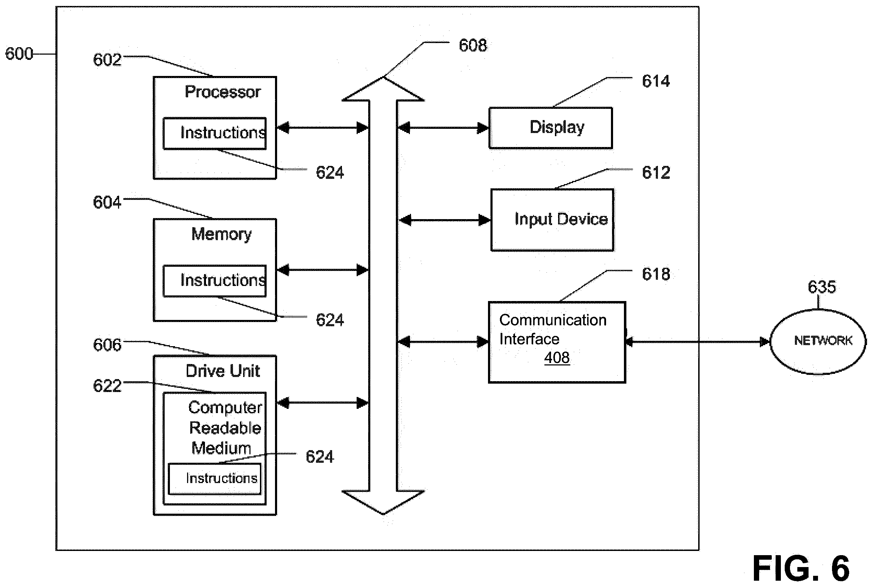

Figure 5 depicts a system 500 for message data recordation for a sequence of communication events in accordance with another embodiment. The system 500 may be configured to implement any one or more of the methods described herein. The system 500 includes a processor 502, which may correspond with or include any one or more of the above-described processors. The system 500 also includes a memory 504 coupled with the processor 502. The configuration of the memory 504 may vary, such that the memory 504 may include any number or combination of storage devices, data stores, databases, and memories. The memory 504 is configured for non-transitory storage of data and/or instructions directed to message data recordation as described herein. The memory 504 may store such data and/or instructions in a volatile and/or non-volatile manner. Further details regarding examples of the processor 502 and the memory 504 are described below in connection with Figure 6.

The system 500 includes first logic 506 stored in the memory 504 and executable by the processor 502 to receive, via a network interface, an originating message for an initial communication event of the sequence of communication events, second logic 508, stored in the memory 504 and executable by the processor 502 to parse, the originating message for the initial communication event to extract message data for the initial communication event, the extracted message data specifying a first group of participants to which the originating message for the initial communication event is visible, third logic 510, stored in the memory 504 and executable by the processor 502 to store the extracted message data in a data structure for the sequence of communication events, the data structure being replicated by a respective communication processor of each participant of the first group of participants, fourth logic 512 stored in the memory 504 and executable by the processor 502 to generate or receive a responsive message to the originating message, the responsive message comprising responsive message data, the responsive message data comprising recipient data, the recipient data permissioning a second group of participants to which the responsive message is visible, the second group differing from the first group, fifth logic 514 stored in the memory 504 and executable by the processor 502, to create a subsidiary data structure of the data structure, sixth logic 516 stored in the memory 504 and executable by the processor 502 to store the responsive message data in the subsidiary data structure, and seventh logic 518 stored in the memory 504 and executable by the processor 502 to transmit, via the network interface to the second group of participants, the responsive message such that receipt of the responsive message causes the subsidiary data structure to be replicated by the respective communication processor of each participant in the second group of participants.

Referring to Figure 6, an illustrative embodiment of a general computer system 600 is shown. The computer system 600 can include a set of instructions that can be executed to cause the computer system 600 to perform any one or more of the methods or computer based functions disclosed herein. The computer system 600 may operate as a standalone device or may be connected, e.g., using a network, to other computer systems or peripheral devices. Any of the components discussed above may be a computer system 600 or a component in the computer system 600.

In a networked deployment, the computer system 600 may operate in the capacity of a server or as a client user computer in a client-server user network environment, or as a peer computer system in a peer-to-peer (or distributed) network environment. The computer system 600 can also be implemented as or incorporated into various devices, such as a personal computer (PC), a server computer, a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular embodiment, the computer system 600 can be implemented using electronic devices that provide voice, video or data communication. Further, while a single computer system 600 is illustrated, the term "system" shall also be taken to include any collection of systems or sub-systems that individually or jointly execute a set, or multiple sets, of instructions to perform one or more computer functions.

As illustrated in Figure 6, the computer system 600 may include a processor 602, e.g., a central processing unit (CPU), a graphics processing unit (GPU), or both. The processor 602 may be a component in a variety of systems. For example, the processor 602 may be part of a standard personal computer or a workstation. The processor 602 may be one or more general processors, digital signal processors, application specific integrated circuits, field programmable gate arrays, servers, networks, digital circuits, analog circuits, combinations thereof, or other now known or later developed devices for analyzing and processing data. The processor 602 may implement a software program, such as code generated manually (i.e., programmed).

The computer system 600 may include a memory 604 that can communicate via a bus 608. The memory 604 may be a main memory, a static memory, or a dynamic memory. The memory 604 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one or more embodiments, the memory 604 includes a cache or random access memory for the processor 602. In alternative embodiments, the memory 604 is separate from the processor 602, such as a cache memory of a processor, the system memory, or other memory. The memory 604 may be an external storage device or database for storing data. Examples include a hard drive, compact disc ("CD"), digital versatile disc ("DVD"), memory card, memory stick, floppy disc, universal serial bus ("USB") memory device, or any other device operative to store data. The memory 604 is operable to store instructions executable by the processor 602. The functions, acts or tasks illustrated in the figures or described herein may be performed by the programmed processor 602 executing the instructions 624 stored in the memory 604. The functions, acts or tasks are independent of the particular type of instructions set, storage media, processor or processing strategy and may be performed by software, hardware, integrated circuits, firmware, microcode and the like, operating alone or in combination. Likewise, processing strategies may include multiprocessing, multitasking, parallel processing and the like.

As shown, the computer system 600 may further include a display unit 614, such as a liquid crystal display (LCD), an organic light emitting diode (OLED), a flat panel display, a solid state display, a cathode ray tube (CRT), a projector, a printer or other now known or later developed display device for outputting determined information. The display 614 may act as an interface for the user to see the functioning of the processor 602, or specifically as an interface with the software stored in the memory 604 or in the drive unit 606.

Additionally, the computer system 600 may include an input device 616 configured to allow a user to interact with any of the components of system 600. The input device 616 may be a number pad, a keyboard, or a cursor control device, such as a mouse, or a joystick, touch screen display, remote control or any other device operative to interact with the system 600.

In a particular embodiment, as depicted in Figure 6, the computer system 600 may also include a disk or optical drive unit 606. The disk drive unit 606 may include a computer-readable medium 622 in which one or more sets of instructions 624, e.g. software, can be embedded. Further, the instructions 624 may embody one or more of the methods or logic as described herein. In a particular embodiment, the instructions 624 may reside completely, or at least partially, within the memory 604 and/or within the processor 602 during execution by the computer system 600. The memory 604 and the processor 602 also may include computer-readable media as discussed above.

The present disclosure contemplates a computer-readable medium that includes instructions 624 or receives and executes instructions 624 responsive to a propagated signal, so that a device connected to a network 635 can communicate voice, video, audio, images or any other data over the network 635 . Further, the instructions 624 may be transmitted or received over the network 635 via a communication interface 618. The communication interface 618 may be a part of the processor 602 or may be a separate component. The communication interface 618 may be created in software or may be a physical connection in hardware. The communication interface 618 is configured to connect with a network 635 , external media, the display 614, or any other components in system 600, or combinations thereof. The connection with the network 635 may be a physical connection, such as a wired Ethernet connection or may be established wirelessly as discussed below. Likewise, the additional connections with other components of the system 600 may be physical connections or may be established wirelessly.

The network 635 may include wired networks, wireless networks, or combinations thereof. The wireless network may be a cellular telephone network, an 802.11, 802.16, 802.20, or WiMax network. Further, the network 635 may be a public network, such as the Internet, a private network, such as an intranet, or combinations thereof, and may utilize a variety of networking protocols now available or later developed including, but not limited to TCP/IP based networking protocols.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer program products, i.e., one or more modules of computer program instructions encoded on a computer readable medium for execution by, or to control the operation of, data processing apparatus. While the computer-readable medium is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein. The computer readable medium can be a machine-readable storage device, a machine-readable storage substrate, a memory device, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

The disclosed computer programs (also known as a program, software, software application, script, or code) can be written in any form of programming language, including compiled or interpreted languages. The disclosed computer programs can be deployed in any form, including as a standalone program or as a module, component, subroutine, or other unit suitable for use in a computing environment. Such computer programs do not necessarily correspond to a file in a file system. Such programs can be stored in a portion of a file that holds other programs or data (e.g., one or more scripts stored in a markup language document), in a single file dedicated to the program in question, or in multiple coordinated files (e.g., files that store one or more modules, sub programs, or portions of code). Such computer programs can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and anyone or more processors of any kind of digital computer. Generally, a processor may receive instructions and data from a read only memory or a random access memory or both. The essential elements of a computer are a processor for performing instructions and one or more memory devices for storing instructions and data. Generally, a computer may also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

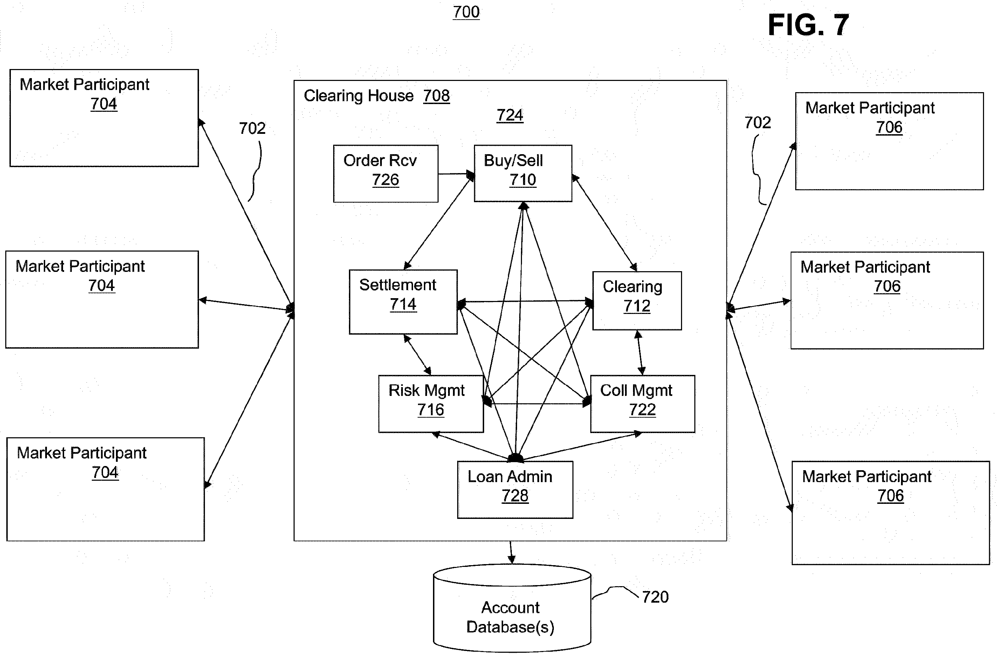

Referring now to Figure 7, there is shown a block diagram of an exemplary network 700 for supporting the above-described transactions. The network 700 couples market participants 704, 706, with a clearing house 708, also referred to as a central counterparty or intermediary, via a communications network 702, such as the Internet, an intranet or other public or private, secured or unsecured communications network or combinations thereof. The network 700 may also be part of, or alternatively coupled with a larger trading network, allowing market participants 704, 706 to trade a variety of other products, via the clearing house 708. It will be appreciated that the plurality of entities utilizing the disclosed embodiments, e.g. the market participants 704, 706, may be referred to as traders, trader-brokers, clearing members, clearing firms, or by other nomenclature reflecting the role that the particular entity is performing with respect to the disclosed embodiments and that a given entity may perform more than one role depending upon the implementation and the nature of the particular transaction being undertaken, as well as the entity's contractual and/or legal relationship with another market participant 704, 706 and/or the clearing house 708.

The clearing house 708 provides a system 724 that implements the functions of buy/sell 710 transactions, clearing 712 those transactions, settling 714 those transactions and managing risk 716 among the market participants 704, 706 and between the market participants and the clearing house 708, as well as administration functionality 728 for, e.g., administering transactions between delivery and redemption. In an alternate embodiment, collateral management 722 and/or request-for-quote functionality (not shown) or netting functionality (not shown) may also be provided, as is discussed in more detail below. The clearing house 708 may be include or be coupled with one or more database(s) 720 or other record keeping system which stores data related to orders.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention but rather as descriptions of features specific to particular embodiments of the invention.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

It will be appreciated that one or more of the processors, memories, logic and/or components described above may be combined or further sub-divided into discrete components thereof, and that all such implementations, accomplishing the disclosed functionality, are contemplated. Further, operation of the above components/functions may be performed on a periodic or batch basis, such as at the close of trading, and/or in real-time continuously throughout the trading day or other window of time.

To clarify the use in the pending claims and to hereby provide notice to the public, the phrases "at least one of <A>, <B>, ... and <N>" or "at least one of <A>, <B>, ... <N>, or combinations thereof" are defined in the broadest sense, superseding any other implied definitions herebefore or hereinafter unless expressly asserted by the Applicant to the contrary, to mean one or more elements selected from the group comprising A, B, ... and N, that is to say, any combination of one or more of the elements A, B, ... or N including any one element alone or in combination with one or more of the other elements which may also include, in combination, additional elements not listed.

It is therefore intended that the foregoing detailed description and drawings be regarded as illustrative rather than limiting, and that it be understood that it is the following claims, that are intended to define the scope of this invention.

## Claims

1. A computer implemented method for message data recordation for a sequence of communication events, the computer implemented method comprising:
receiving (200), via a network interface, by a communication processor, an originating message for an initial communication event of the sequence of communication events;
parsing (202), by the communication processor, the originating message for the initial communication event to extract message data for the initial communication event, the extracted message data specifying a first group of participants to which the originating message for the initial communication event is visible;
storing (204), by the communication processor, the extracted message data in a blockchain data structure for the sequence of communication events, the blockchain data structure being replicated by a respective communication processor of each participant of the first group of participants in a respective memory coupled to the respective communication processor;
receiving (206), by the communication processor, a responsive message of a further communication event in the sequence of communication events in response to the originating message, the responsive message comprising responsive message data, the responsive message data comprising permissioning data, the permissioning data specifying a second group of participants to which the responsive message is visible, the second group differing from the first group;
creating (208), by the communication processor, a subsidiary blockchain data structure of the blockchain data structure to support privacy of the responsive message in accordance with the permissioning data;
storing (210), by the communication processor, the responsive message data in the subsidiary blockchain data structure;
determining (214), by the communication processor, whether the sequence of communication events is complete by detecting whether the responsive message data comprises a keyword indicative of completion;
if the sequence of communication events is complete, anchoring (216) the subsidiary blockchain data structure to the blockchain data structure; and
disseminating (216) a notification of a completion of the sequence of communication events to the first group of participants without disclosing message data stored in the subsidiary blockchain data structure.

2. The computer implemented method of claim 1, wherein the communication processor is a processor of a clearing house computer system.

3. The computer implemented method of any preceding claim, wherein the recipient data permissioning the second group of participants specifies additional participants not included in the first group of participants.

4. The computer implemented method of any preceding claim, wherein parsing the originating message comprises parsing the originating message into predefined keywords.

5. The computer implemented method of any preceding claim, further comprising incorporating a hash or Merkle root of the subsidiary blockchain data structure into the blockchain data structure for the originating message upon completion of the sequence of communication events.

6. The computer implemented method of any of claims 1-5, wherein the keyword is denoted with a predetermined symbol.

7. The computer implemented method of any of claims 1-5, wherein the keyword is a hashtag-based keyword.

8. A system for message data recordation for a sequence of communication events arranged to perform the method of any preceding claim, the system comprising:
a network interface processor configured to receive, via a network interface, an originating message for an initial communication event of the sequence of communication events;
a message processor configured to parse the originating message for the initial communication event to extract message data for the initial communication event, the extracted message data specifying a first group of participants to which the originating message for the initial communication event is visible;
a memory in which a blockchain data structure for the sequence of communication events is stored; and
a data structure management processor configured to store the extracted message data in the blockchain data structure, the blockchain data structure being replicated by a respective communication processor of each participant of the first group of participants in a respective memory coupled to the respective communication processor;
wherein the message processor is further configured to receive a responsive message of a further communication event in the sequence of communication events in response to the originating message, the responsive message comprising responsive message data, the responsive message data comprising permissioning data, the permissioning data specifying a second group of participants to which the responsive message is visible, the second group differing from the first group,
wherein the data structure management processor is further configured to create, in the memory, a subsidiary blockchain data structure of the data structure to support privacy of the responsive message in accordance with the permissioning data and store the responsive message data in the subsidiary blockchain data structure, and
wherein the network interface processor is further configured to determine whether the sequence of communication events is complete by detecting whether the responsive message data comprises a keyword indicative of completion, and, if the sequence of communication events is complete, anchor the subsidiary blockchain data structure to the blockchain data structure and transmit, via the network interface to the first group of participants, a notification of the completion of the sequence of communication events, the notification not disclosing to the first group of participants private portions of the responsive message data stored in the subsidiary blockchain data structure.

## Patentansprüche

1. Computerimplementiertes Verfahren zur Aufzeichnung von Nachrichtendaten für eine Sequenz von Kommunikationsereignissen, wobei das computerimplementierte Verfahren umfasst:
Empfangen (200), über eine Netzwerkschnittstelle, durch einen Kommunikationsprozessor, einer ausgehenden Nachricht für ein ursprüngliches Kommunikationsereignis der Sequenz von Kommunikationsereignissen;
Analysieren (202), durch den Kommunikationsprozessor, der ausgehenden Nachricht für das ursprüngliche Kommunikationsereignis, um Nachrichtendaten für das ursprüngliche Kommunikationsereignis zu extrahieren, wobei die extrahierten Nachrichtendaten eine erste Gruppe von Teilnehmern bestimmen, für welche die ausgehende Nachricht für das ursprüngliche Kommunikationsereignis sichtbar ist;
Speichern (204), durch den Kommunikationsprozessor, der extrahierten Nachrichtendaten in einer Blockchain-Datenstruktur für die Sequenz von Kommunikationsereignissen, wobei die Blockchain-Datenstruktur durch einen jeweiligen Kommunikationsprozessor jedes Teilnehmers der ersten Gruppe von Teilnehmern in einem jeweiligen Speicher, der mit dem jeweiligen Kommunikationsprozessor verbunden ist, kopiert wird;
Empfangen (206), durch den Kommunikationsprozessor, einer Antwortnachricht eines weiteren Kommunikationsereignisses in der Sequenz von Kommunikationsereignissen ansprechend auf die ausgehende Nachricht, wobei die Antwortnachricht Antwort-Nachrichtendaten umfasst, wobei die Antwort-Nachrichtendaten Zulassungsdaten umfassen, wobei die Zulassungsdaten eine zweite Gruppe von Teilnehmern bestimmen, für welche die Antwortnachricht sichtbar ist, wobei sich die zweite Gruppe von der ersten Gruppe unterscheidet;
Erzeugen (208), durch den Kommunikationsprozessor, einer subsidiären Blockchain-Datenstruktur der Blockchain-Datenstruktur zur Unterstützung des Datenschutzes der Antwortnachricht gemäß den Zulassungsdaten;
Speichern (210), durch den Kommunikationsprozessor, der Antwort-Nachrichtendaten in der subsidiären Blockchain-Datenstruktur;
Bestimmen (214), durch den Kommunikationsprozessor, ob die Sequenz von Kommunikationsereignissen fertig ist, indem erfasst wird, ob die Antwort-Nachrichtendaten ein Schlüsselwort umfassen, das die Fertigstellung anzeigt;
falls die Sequenz von Kommunikationsereignissen fertig ist, Verankern (216) der subsidiären Blockchain-Datenstruktur mit der Blockchain-Datenstruktur; und
Verbreiten (216) einer Nachricht über eine Fertigstellung der Sequenz von Kommunikationsereignissen an die erste Gruppe von Teilnehmern, ohne Nachrichtendaten offenzulegen, die in der subsidiären Blockchain-Datenstruktur gespeichert sind.

2. Computerimplementiertes Verfahren nach Anspruch 1, wobei der Kommunikationsprozessor ein Prozessor eines Clearingstellen-Computersystems ist.

3. Computerimplementiertes Verfahren nach einem der vorhergehenden Ansprüche, wobei die Empfängerdaten, welche die zweite Gruppe von Teilnehmern erlauben, zusätzliche Teilnehmer bestimmen, die nicht in der ersten Gruppe von Teilnehmern enthalten sind.

4. Computerimplementiertes Verfahren nach einem der vorhergehenden Ansprüche, wobei das Analysieren der ausgehenden Nachricht das Zerlegen der ausgehenden Nachricht in vordefinierte Schlüsselwörter umfasst.

5. Computerimplementiertes Verfahren nach einem der vorhergehenden Ansprüche, das weiter das Einfügen einer Raute oder Merkle-Wurzel der subsidiären Blockchain-Datenstruktur in die Blockchain-Datenstruktur für die ausgehende Nachricht nach der Fertigstellung der Sequenz von Kommunikationsereignissen umfasst.

6. Computerimplementiertes Verfahren nach einem der Ansprüche 1 bis 5, wobei das Schlüsselwort mit einem vorher festgelegten Symbol markiert wird.

7. Computerimplementiertes Verfahren nach einem der Ansprüche 1 bis 5, wobei das Schlüsselwort ein Hashtag-basiertes Schlüsselwort ist.

8. System zur Aufzeichnung von Nachrichtendaten für eine Sequenz von Kommunikationsereignissen, das angeordnet ist, um das Verfahren nach einem der vorstehenden Ansprüche auszuführen, wobei das System umfasst:
einen Netzwerkschnittstellenprozessor, der ausgestaltet ist, über eine Netzwerkschnittstelle eine ausgehende Nachricht für ein ursprüngliches Kommunikationsereignis der Sequenz von Kommunikationsereignissen zu empfangen;
einen Nachrichtenprozessor, der ausgestaltet ist, die ausgehende Nachricht für das ursprüngliche Kommunikationsereignis zu analysieren, um Nachrichtendaten für das ursprüngliche Kommunikationsereignis zu extrahieren, wobei die extrahierten Nachrichtendaten eine erste Gruppe von Teilnehmern bestimmen, für welche die ausgehende Nachricht für das ursprüngliche Kommunikationsereignis sichtbar ist;
einen Speicher, in welchem eine Blockchain-Datenstruktur für die Sequenz von Kommunikationsereignissen gespeichert wird; und
einen Datenstruktur-Managementprozessor, der ausgestaltet ist, um die extrahierten Nachrichtendaten in der Blockchain-Datenstruktur zu speichern, wobei die Blockchain-Datenstruktur durch einen jeweiligen Kommunikationsprozessor jedes Teilnehmers der ersten Gruppe von Teilnehmern in einem jeweiligen Speicher, der mit dem jeweiligen Kommunikationsprozessor verbunden ist, kopiert wird;
wobei der Nachrichtenprozessor weiter ausgestaltet ist, eine Antwortnachricht eines weiteren Kommunikationsereignisses in der Sequenz von Kommunikationsereignissen ansprechend auf die ausgehende Nachricht zu empfangen, wobei die Antwortnachricht Antwort-Nachrichtendaten umfasst, wobei die Antwort-Nachrichtendaten Zulassungsdaten umfassen, wobei die Zulassungsdaten eine zweite Gruppe von Teilnehmern bestimmen, für welche die Antwortnachricht sichtbar ist, wobei sich die zweite Gruppe von der ersten Gruppe unterscheidet;
wobei der Datenstruktur-Managementprozessor weiter ausgestaltet ist, in dem Speicher eine subsidiäre Blockchain-Datenstruktur der Datenstruktur zur Unterstützung des Datenschutzes der Antwortnachricht gemäß den Zulassungsdaten zu erzeugen und die Antwort-Nachrichtendaten in der subsidiären Blockchain-Datenstruktur zu speichern, und
wobei der Netzwerkschnittstellenprozessor weiter ausgestaltet ist, zu bestimmen, ob die Sequenz von Kommunikationsereignissen fertig ist, indem erfasst wird, ob die Antwort-Nachrichtendaten ein Schlüsselwort umfassen, das die Fertigstellung anzeigt, und, falls die Sequenz von Kommunikationsereignissen fertig ist, die subsidiäre Blockchain-Datenstruktur mit der Blockchain-Datenstruktur verankert, und eine Benachrichtigung über die Fertigstellung der Sequenz von Kommunikationsereignissen an die erste Gruppe von Teilnehmern über die Netzwerkschnittstelle überträgt, wobei die Benachrichtigung der ersten Gruppe von Teilnehmern keine privaten Abschnitte der Antwort-Nachrichtendaten offenlegt, die in der subsidiären Blockchain-Datenstruktur gespeichert sind.

## Revendications

1. Procédé mis en œuvre par ordinateur pour l'enregistrement de données de message pour une séquence d'événements de communication, le procédé mis en œuvre par ordinateur comprenant les étapes consistant à :
recevoir (200), via une interface réseau, par l'intermédiaire d'un processeur de communication, un message d'origine pour un événement de communication initial de la séquence d'événements de communication ;
analyser (202), par l'intermédiaire du processeur de communication, le message d'origine pour l'événement de communication initial afin d'extraire des données de message pour l'événement de communication initial, les données de message extraites spécifiant un premier groupe de participants pour lesquels le message d'origine pour l'événement de communication initial est visible ;
stocker (204), par l'intermédiaire du processeur de communication, les données de message extraites dans une structure de données de chaîne de blocs pour la séquence d'événements de communication, la structure de données de chaîne de blocs étant répliquée par un processeur de communication respectif de chaque participant du premier groupe de participants dans une mémoire respective couplée au processeur de communication respectif ;
recevoir (206), par l'intermédiaire du processeur de communication, un message de réponse d'un événement de communication supplémentaire dans la séquence d'événements de communication en réponse au message d'origine, le message de réponse comprenant des données de message de réponse, les données de message de réponse comprenant des données d'autorisation, les données d'autorisation spécifiant un second groupe de participants pour lesquels le message de réponse est visible, le second groupe différant du premier groupe ;
créer (208), par l'intermédiaire du processeur de communication, une structure de données de chaîne de blocs subsidiaire de la structure de données de chaîne de blocs pour prendre en charge la confidentialité du message de réponse conformément aux données d'autorisation ;
stocker (210), par l'intermédiaire du processeur de communication, les données de message de réponse dans la structure de données de chaîne de blocs subsidiaire ;
déterminer (214), par l'intermédiaire du processeur de communication, si la séquence d'événements de communication est complète en détectant si les données de message de réponse comprennent un mot-clé indicatif d'un achèvement ;
si la séquence d'événements de communication est achevée, ancrer (216) la structure de données de chaîne de blocs subsidiaire à la structure de données de chaîne de blocs ; et
diffuser (216) une notification d'achèvement de la séquence d'événements de communication au premier groupe de participants sans divulguer des données de message stockées dans la structure de données de chaîne de blocs subsidiaire.

2. Procédé mis en œuvre par ordinateur selon la revendication 1, dans lequel le processeur de communication est un processeur d'un système informatique de chambre de compensation.

3. Procédé mis en œuvre par ordinateur selon l'une quelconque des revendications précédentes, dans lequel les données de destinataire autorisant le second groupe de participants spécifient des participants supplémentaires non inclus dans le premier groupe de participants.

4. Procédé mis en œuvre par ordinateur selon l'une quelconque des revendications précédentes, dans lequel l'analyse du message d'origine comprend une analyse du message d'origine en mots-clés prédéfinis.

5. Procédé mis en œuvre par ordinateur selon l'une quelconque des revendications précédentes, comprenant en outre une incorporation d'une racine de hachage ou de Merkle de la structure de données de chaîne de blocs subsidiaire dans la structure de données de chaîne de blocs pour le message d'origine à l'achèvement de la séquence d'événements de communication.

6. Procédé mis en œuvre par ordinateur selon l'une quelconque des revendications 1 à 5, dans lequel le mot-clé est désigné par un symbole prédéterminé.

7. Procédé mis en œuvre par ordinateur selon l'une quelconque des revendications 1 à 5, dans lequel le mot-clé est un mot-clé basé sur un hashtag.

8. Système pour une enregistrement de données de message pour une séquence d'événements de communication agencé pour exécuter le procédé selon l'une quelconque des revendications précédentes, le système comprenant :
un processeur d'interface réseau configuré pour recevoir, via une interface réseau, un message d'origine pour un événement de communication initial de la séquence d'événements de communication ;
un processeur de message configuré pour analyser le message d'origine pour l'événement de communication initial afin d'extraire des données de message pour l'événement de communication initial, les données de message extraites spécifiant un premier groupe de participants pour lesquels le message d'origine pour l'événement de communication initial est visible ;
une mémoire dans laquelle une structure de données de chaîne de blocs pour la séquence d'événements de communication est stockée ; et
un processeur de gestion de structure de données configuré pour stocker les données de message extraites dans la structure de données de chaîne de blocs, la structure de données de chaîne de blocs étant répliquée par un processeur de communication respectif de chaque participant du premier groupe de participants dans une mémoire respective couplée au processeur de communication respectif ;
dans lequel le processeur de message est en outre configuré pour recevoir un message de réponse d'un événement de communication supplémentaire dans la séquence d'événements de communication en réponse au message d'origine, le message de réponse comprenant des données de message de réponse, les données de message de réponse comprenant des données d'autorisation, les données d'autorisation spécifiant un second groupe de participants pour lesquels le message de réponse est visible, le second groupe différant du premier groupe,
dans lequel le processeur de gestion de structure de données est en outre configuré pour créer, dans la mémoire, une structure de données de chaîne de blocs subsidiaire de la structure de données pour prendre en charge la confidentialité du message réactif conformément aux données d'autorisation et stocker les données de message réactif dans la structure de données de chaîne de blocs subsidiaire, et
dans lequel le processeur d'interface réseau est en outre configuré pour déterminer si la séquence d'événements de communication est complète en détectant si les données de message sensibles comprennent un mot-clé indiquant l'achèvement, et, si la séquence d'événements de communication est complète, pour ancrer la structure de données de chaîne de blocs subsidiaire à la structure de données de chaîne de blocs et transmettre, via l'interface réseau au premier groupe de participants, une notification de l'achèvement de la séquence d'événements de communication, la notification ne divulguant pas au premier groupe de participants des parties privées des données de message sensibles stockées dans la structure de données de chaîne de blocs subsidiaire.
